# EUROPEAN PATENT SPECIFICATION

(11) **EP 0 380 841 B1**
(45) Date of publication and mention of the grant of the patent: **29.12.1993**
(21) Application number: 89306482.4
(22) Date of filing: 26.06.1989
(51) Int. Cl.: B29D 23/22, F16L 11/10

(54) **Coated braided hose method and assembly**
Geflochtener beschichteter Schlauch, Verfahren und Vorrichtung
Tuyau souple tressé et revêtu, procédé et dispositif

(30) Priority: 02.02.1989 US 305643
(43) Date of publication of application: 08.08.1990
(73) Proprietor: TELEFLEX INCORPORATED, Limerick Pennsylvania 19468 (US)
(72) Inventor: Martucci, Norman S., Birmingham Michigan 48009 (US)
(74) Representative: Walters, Frederick James

(56) References cited:
- US-A- 2 383 733
- US-A- 3 334 165
- US-A- 3 883 384
- US-A- 4 059 847
- DATABASE WPIL, no. 86-208421, Derwent Publications Ltd, London, GB; & JP-A-61 140 692 (TOKAI RUBBER IND. K.K.) 13-12-1984

## Description

### TECHNICAL FIELD

This invention relates to a hose assembly and a method for making such a hose according to the preambles of claims 1 and 10. Specifically, the invention relates to a hose assembly adapted for carrying vehicle fuels.

### BACKGROUND ART

Hose assemblies used to carry fuels are well known in the art. The hose should preferably be strong and resistant to heat and chemical degradation. These hoses are subject chemical breakdown by the various fluids which flow through them. Further, these hoses are typically routed through the engine compartment of the vehicle to deliver fuel to the engines. These engines are hot and thus, the hoses used to carry fuel are subject to breakdown from the heat.

Hoses made of TEFLON (trade-mark of Dupont) provide the necessary physical properties for carrying fuels. A major problem with these types of hoses is that when used alone, i.e., only a TEFLON liner or conduit, they tend to get bent during installation and they kink. This kink or deformation remains permanent and provides constant resistance to fluid flow through the hose. To solve this problem, one known hose assembly includes an inner TEFLON tubular member. The inner tubular member is surrounded by a tightly wound metallic braid. The metallic braid allows the TEFLON inner tubular member to bend to a certain degree without kinking. However, if bent past a certain point the metallic braid aids in the kinking of the inner tubular member. This assembly, has three major disadvantages. First, the metallic braid tends to abrade the exterior of the inner tubular member. This causes leaks from the inner tubular member. The second problem is that the exterior metallic braided casing is thermally and electrically conductive. More important is that the metallic braid will retain heat and transfer the heat to the fuel moving through the inner tubular member causing fuel system problems. Finally, if used in an automotive environment, the metallic braid transmits noise during operation of the vehicle which is undesirable.

Copending Application United States Serial Number 244,319 filed September 8, 1988 and assigned to the assignee of the subject invention discloses a hose assembly for carrying fuels. The assembly includes an inner fluorocarbon polymer liner. In one embodiment, glass fiber is braided about the inner liner. An outer layer of a fluorocarbon foam is disposed over the glass fiber braided layer.

United States Patent Number 4,111,237 to Mutzner et al issued September 5, 1978 discloses a hose assembly. The assembly includes a polychloroprene inner liner. A glass fiber is then braided about the exterior of the inner liner. A rubber layer is then wrapped over the braided layer. A second braided layer of nylon is then placed about the rubber layer. Finally, a cover of polychloroprene is then extruded about the second braided layer.

United States Patent Number 3,547,162 to Schuerer issued December 15, 1970 discloses a plastic pipe assembly. The assembly includes an inner liner of a synthetic plastic made from cross linked olefinic polymers. A fiber braided layer is disposed over the inner liner. Finally, a foamed layer of synthetic plastic is disposed about the synthetic fiber reinforcement. By utilising cross linked olefinic polymers, the system is deficient in that it cannot be used to carry vehicle fuels, as such fuels would degrade the inner liner. Further, this assembly requires a very thick outer casing to provide the necessary strength.

United States Patent No. 2,383,733 discloses a tube structure in which a tubular member is provided at its ends with couplings for connection to fittings for conducting fluid therethrough. The tubular member has an inner organic tube or liner of rubber (or a rubber substitute such as "neoprene") on which is carried a sleeve of braided glass fibers and an exterior coating of flexible plastics (such as a vinyl polymer) which penetrates the braid to coat the individual fibers. The materials of the tubular member and coating are vulcanised together at their interface to form a bond between the inner tube and the surrounding sleeve of coated glass fibers.

United States Patent No. 4,059,847 discloses a hose assembly having a polymeric inner tube on which is carried two overlying reinforcing braided sleeves. An electrically conductive layer of carbonaceous particles is disposed between the two braided sleeves for dissipating static electricity in the hose assembly. The outermost braided sleeve may be provided with a protective coating of elastomeric material.

It is an object of the present invention to provide for a hose assembly comprising organic polymeric materials and braided reinforcement and the structure of which is an improvement over the prior proposals in that it is particularly suitable for use in automotive environments for carrying fuels, it will alleviate kinking or deforming upon bending and has low thermal conductivity.

### SUMMARY OF INVENTION AND ADVANTAGES

According to the present invention there is provided a hose assembly having a tubular member and coupling means for connecting the ends of the tubular member to fittings for conducting fluid therethrough; the tubular member having an inner organic polymeric tubular liner, a braided reinforcing layer about the exterior of the inner liner and an organic polymeric coating for the braided layer which coating penetrates the braided layer and is secured at its interface with the inner liner CHARACTERISED IN THAT the inner liner and coating comprise fluorocarbon polymers resistant to heat and chemical degradation and in that the fluorocarbon polymer coating is dispersed in the braided layer from the outer periphery and radially inwardly of that layer and is cured in contact with the fluorocarbon polymer inner liner.

Further according to the present invention there is provided a method of making a hose assembly which comprises forming an inner organic polymeric tubular liner; providing a reinforcing layer of braided material about the exterior of the liner; applying an organic polymeric coating to the braided layer for said coating to penetrate the braided layer and be secured at its interface with the liner to form a tubular member, and fitting to said tubular member coupling means for connecting the ends of the tubular member to fittings for conducting fluid therethrough CHARACTERISED BY forming the liner of fluorocarbon polymer, applying said coating to comprise a fluorocarbon polymer dispersed in the braided material from the outer periphery and radially inwardly of the reinforcing layer, and curing the fluorocarbon polymer coating in contact with the fluorocarbon polymer liner for said fluorocarbon polymeric material to be resistant to heat and chemical degradation. Preferably a solution of the fluorocarbon polymer and at least one solvent is dispersed throughout the braided material in said method.

The hose assembly of the present invention includes a fluorocarbon polymeric coating dispersed throughout a braided layer on a fluorocarbon polymeric inner tubular member or liner. The coating dispersed throughout the braided layer provides a thin coating which covers the fibers in the braided layer and is cured in contact with the inner liner. This coating provides the necessary strength so that the inner tubular member does not kink or deform upon bending. By using a fluorocarbon polymeric coating dispersed throughout the braided material the weight size, and cost of the hose is substantially reduced. Further, the assembly is resistant to both heat and chemical degradation which makes it suitable for use in automotive environments for carrying fuels. Finally, the assembly is not thermally conductive. Thus heat from the exterior of the hose will not be transmitted to the fuel through the hose assembly.

Further preferred embodiments of the invention are defined in the features of the dependent claims.

### FIGURES IN THE DRAWINGS

Other advantages of the present invention will be readily appreciated as the same becomes better understood by reference to the following detailed description when considered in connection with the accompanying drawings wherein:

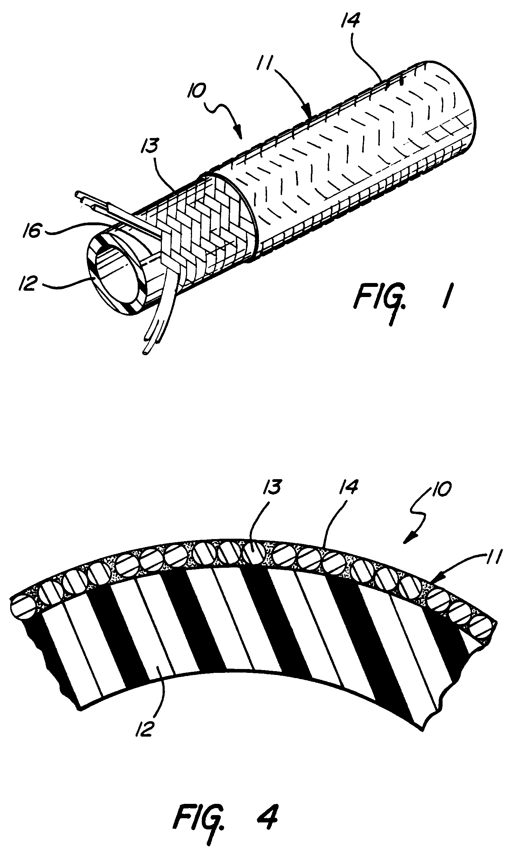

Figure 1 is a perspective view of the preferred embodiment of the instant invention;
Figure 2 is a side view partially broken away of the preferred embodiment of the instant invention including a coupling member;
Figure 3 is a side view partially broken away of the preferred embodiment of the instant invention including an alternative coupling member; and
Figure 4 is an enlarged sectional view of the hose assembly.

### DETAILED DESCRIPTION OF THE DRAWINGS

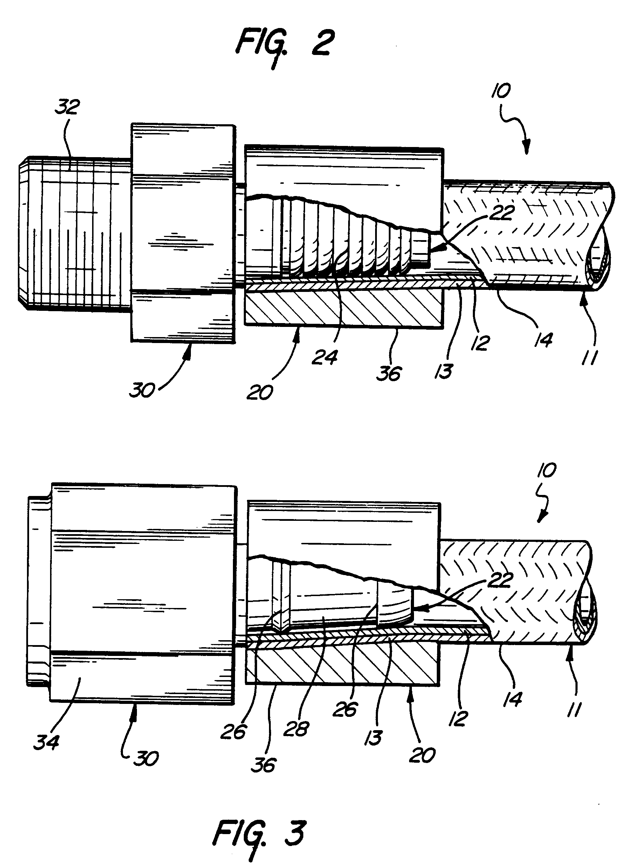

A hose assembly made in accordance with the instant invention is generally shown at 10 in the Figures. The assembly 10 includes a tubular member, generally indicated at 11, and coupling means, generally indicated at 20 (as best viewed in Figures 2 and 3), for connecting the ends of the tubular member 11 to fittings for conducting fluid therethrough.

The tubular member 11 includes an inner fluorocarbon polymeric liner 12. The liner 12 is preferably extruded and has a wall thickness of between 0.0025 and 0.0305 cms (.001 and .012 inches).

Specifically, the inner liner is made of the polymer of tetrafluoroethylene (PTFE), the polymer of fluorinated ethylene propylene (FEP), the polymer of perfluoroalkoxy resin (PFA), or the polymer of ethelyne-tetrafluoroethylene (ETFE). The fluorocarbon polymers PTFE, FEP, PFA are sold under the trademark TEFLON by Dupont. The polymer ETFE is sold under the trademark TEFZEL by Dupont.

The inner liner 12 is impervious to fluid flow through the wall. Since the inner liner is made of a fluorocarbon polymer material, it is resistant to both heat and chemical degradation. This allows a variety of fluids, particularly vehicle fuels, to pass through the interior of the liner 12 without corroding the liner 12.

The assembly 10 further includes a braided layer 13 about the exterior of the inner liner 12. The braided layer 13 can comprise any nonmetallic material. Preferably the material to be used for the braided layer 13 is glass fiber. Glass fibers provide the necessary strength. Further, glass fibers are heat resistant which is important for use in heated environments and for making the assembly as will be described subsequently. The braided fibers may be tightly wound or they may be loosely wound having wide gaps between adjacent fibers. In the preferred embodiment, the glass fibers are tightly wound such that the gaps or spaces between adjacent fibers is minimal. The braided layer 13 adds to the strength of the inner liner 12. Particularly, by using a braided layer 13, a higher pressure fluid can flow throughout the inner liner 12. Further, the braided layer 13 adds to the tensile strength of the hose assembly 10. When coupling members 20 are disposed on the ends of the tubular member 11, as will be described subsequently, the braided layer 13 increases the tensile strength of the hose assembly 10 sufficiently to fixedly connect any type of coupling member 20 to the tubular member 11.

The assembly 10 further includes a fluorocarbon polymeric dispersion or coating 14 throughout the braided layer 13. Specifically, the fluorocarbon polymeric material 14 is dispersed about the braided layer 13 from the outer periphery of the braided layer 13 radially inwardly toward the inner liner 12 (as best viewed in Fig. 4).

Specifically, the coating 14 preferably comprises the polymer of tetrafluoroethylene (PTFE), the polymer of fluorinated ethylene propylene (FEP), the polymer of perfluoroalkoxy resin (PFA), or the polymer of ethylene-tetrafluoroethylene (ETFE).

The coating 14 coats the glass fibers of the braided layer 13. That is, the coating 14 covers the fibers of the braided layer 13 from the outer periphery radially inwardly. The coating, therefore, does not extend radially outwardly from the outer periphery of the braided layer 13. After the material has been coated, each fiber is discernible. In effect, what results is a coating 14 having the braided layer 13 therein.

The outer coating 14 is formed by first braiding the material 13 about the exterior of the inner liner 12. The fluorocarbon polymeric material 14 is then disposed throughout the braided material 13 from the outer periphery of the braided layer 13 radially inwardly toward the inner liner. Preferably, the fluorocarbon polymeric material 14 is in solution. In other words, the coating 14, as applied, comprises the fluorocarbon polymer and at least one solvent. The preferable solvent is water. It will be appreciated that any suitable solvent may be used. The fluorocarbon polymer solution coats or is dispersed throughout the entire braided layer 13. Specifically, the fluorocarbon polymer solution effectively coats each of the glass fibers from the outer periphery radially inwardly. That is, the glass fibers are coated such that any gap between adjacent fibers will be filled with the polymer solution. Also, the outer periphery of each fiber is completely coated. The solvent is then removed from the solution by drying. This leaves a fluorocarbon polymer material dispersed throughout braided layer 13.

As previously stated, both the inner liner 12 and coating 14 are preferably fluorocarbon polymers. It is, however, not necessary that both the inner liner 12 and coating 14 be of the same fluorocarbon polymer, although they may be. For example, the inner liner 12 may be made of PFA while the coating 14 is made of PTFE. Any combination of the fluorocarbon polymers listed may be utilized for the inner liner 12 and coating 14.

The coating 14 in conjunction with the braided layer 13 allows the inner liner 12 to be bent without kinking. That is, the coating 14 dispersed throughout the braided layer 13 provides strength to the inner liner 12 upon bending. This is commonly referred to as hoop strength. Thus, by using a polymeric coating 14 dispersed throughout the braided layer, a trim profile assembly is produced which results in the hoop strength of the tubular member 11 being increased, so that the tubular member 11 can be bent without kinking the inner liner 12. Further, the outer coating 14 adds to the working pressure of the hose. That is, the coating 14 provides strength and allows the inner liner 12 to accommodate a fluid under pressure. Also, the coating 14 hinders abrasion of the tubular member. Said another way, the coating 14 aids in abrasion resistance of the tubular member 11. That is, because the coating is continuous about the outer periphery of the braided layer 13, the braided layer is not subject to abrasion. The coating 14 resists abrasion.

The assembly 10 further includes coupling means generally indicated at 20. The coupling means 20 is for connecting the assembly 10 to a fitting (not shown). The fitting is adapted to cooperate with the coupling means 20. Specifically, the coupling means 20 comprises a coupling assembly 20. The coupling assembly 20 includes an insert portion, generally indicated at 22 for inserting into and engaging the interior inner liner 12. The insert portion 22 may have a plurality of barbs 24 for engaging the interior of the inner liner 12 (as best viewed in Figure 2). Alternatively, the insert portion may have a pair of annular ridges 26, and a smooth portion 28 therebetween (as best viewed in Figure 3). The coupling assembly 20 further includes an engaging portion generally indicated at 30 extending longitudinally from the insert portion. The engaging portion is for engaging a fitting (not shown) adapted to cooperate therewith. The engaging portion 30 may comprise a male threaded member 32 (Figure 2) or a female threaded member 34 (Figure 3). The engaging portion 30 may also comprise any configuration adapted to cooperate with a member to which it will be fixed. For example, the engaging portion 30 may comprise a socket to receive a mating ball joint. Finally, the coupling assembly 20 includes a locking collar 36. The locking collar 36 is disposed about the exterior of the outer coating 14 and is slid over the insert portion 22 of the coupling assembly 20. In this manner, the inner liner 12 is forced into tight frictional engagement with the insert portion 22 to prevent relative axial movement between the inner liner 12 and insert portion 22. The coupling assembly 20 can be of any other well known type. For example, the coupling assembly 20 may be of an organic polymeric material and may be molded about the tubular member 11 for a mechanical connection or fusion bond.

As fluid flows through the inner liner 12, electrical charges tend to build throughout the length of the inner liner 12. In order to prevent these electrical charges from accumulating, the inner liner 12 has an integral longitudinal conductive means coextensive with the length of the inner liner 12 for conducting an electrical charge through the liner. Preferably, the inner liner 12 has a conductive strip 16 of carbon black. This carbon black is electrically conductive and will dissipate any electrical charges built up by the fluid. Alternatively, the whole inner tubular member 12 can comprise the conductive means. This is done by using carbon black about the entire inner liner 12. The braided layer 13 and coating 14 are preferably electrically non-conductive. This is important in that electrical charges applied to the exterior of the outer coating 14 will not be conducted throughout the length of the tubular member 11 or to the fluid passing through the interior of the inner liner 12. It will be appreciated that other conductive material may be used to form the conductive strip 16.

The preferred method for making the hose assembly 10 is as follows. The inner fluorocarbon polymeric tubular member 12 is provided. Specifically, the inner tubular member 12 is extruded. A nonmetallic material (preferably glass fiber) is then braided about the exterior of the inner liner 12 to form a braided layer 13. An fluorocarbon polymeric material solution 14 is then dispersed throughout the braided layer 13 from the outer periphery radially inwardly toward the inner liner 12. Specifically, the inner liner 12 and braided material are passed through a reservoir containing a solution of a fluorocarbon polymeric material and at least one solvent. Preferably, the solution is an aqueous solution of a fluorocarbon polymer. Because the solution is preferably aqueous, the solvent used is preferably water. The solution is disposed throughout the entire braided layer 13. The solvent, preferably water, is then removed from the solution. Specifically, the assembly 10 is sent to a dryer, a preheat oven which is above the boiling temperature of the solvent (water). The solvent (water) is removed from the solution to leave coating 14 of the fluorocarbon polymeric material dispersed throughout the braided material 13. The assembly 10 is then sintered at a suitable temperature to cure the fluorocarbon polymeric coating 14. Because glass fibers are used for the braided layer 13, the braided layer 13 is unaffected by the heat required to sinter the assembly 10. Finally, a coupling member 20 may be secured on one or both ends of the tubular member 11 to secure the assembly 10 to a fitting (not shown) for conducting fluid through the inner liner 12.

## Claims

1. A hose assembly (10) having a tubular member (11) and coupling means (20) for connecting the ends of the tubular member (11) to fittings for conducting fluid therethrough; the tubular member (11) having an inner organic polymeric tubular liner (12), a braided reinforcing layer (13) about the exterior of the inner liner (12) and an organic polymeric coating (14) for the braided layer which coating penetrates the braided layer (13) and is secured at its interface with the inner liner (12) CHARACTERISED IN THAT the inner liner (12) and coating (14) comprise fluorocarbon polymers resistant to heat and chemical degradation and in that the fluorocarbon polymer coating (14) is dispersed in the braided layer (13) from the outer periphery and radially inwardly of that layer and is cured in contact with the fluorocarbon polymer inner liner (12).

2. An assembly according to claim 1 characterised in that said braided layer (13) comprises a tightly wound non-metallic braid.

3. An assembly according to either claim 1 or claim 2 characterised in that the braided layer (13) comprises glass fiber.

4. An assembly according to any one of the preceding claims characterised in that said inner liner (12) has an integral longitudinal conductive means (16) co-extensive with the length of said inner liner (12) for conducting electrical charge through said inner liner (12).

5. An assembly according to any of the preceding claims characterised in that said conductive means (16) comprises carbon black.

6. An assembly according to any of the preceding claims characterised in that said fluorocarbon polymer comprises the polymer of tetrafluoroethylene fluorinated ethylene propylene, perfluoroalkoxy, or ethelyne-tetrafluorethylene.

7. An assembly according to any of the preceding claims characterised in that the coupling means (20) comprises an insert portion (22) for engaging the interior of said inner liner (12); and an engaging portion (30) extending longitudinally from said insert portion (20) for engaging a fitting.

8. An assembly according to claim 7 characterised in that the coupling means (20) comprises a locking collar disposed about the exterior of said outer coating (14) for forcing the inner liner (12) into engagement with said insert portion (22) and preventing relative axial movement therebetween.

9. An assembly according to any one of the preceding claims characterised in that the inner liner (12) and coating (14) are of the same fluorocarbon polymeric material.

10. A method of making a hose assembly (10) which comprises forming an inner organic polymeric tubular liner (12); providing a reinforcing layer (13) of braided material about the exterior of the liner (12); applying an organic polymeric coating (14) to the braided layer (13) for said coating to penetrate the braided layer and be secured at its interface with the liner (12) to form a tubular member (11), and fitting to said tubular member (11) coupling means (20) for connecting the ends of the tubular member to fittings for conducting fluid therethrough CHARACTERISED BY forming the liner (12) of fluorocarbon polymer, applying said coating (14) to comprise a fluorocarbon polymer dispersed in the braided material (13) from the outer periphery and radially inwardly of the reinforcing layer, and curing the fluorocarbon polymer coating (14) in contact with the fluorocarbon polymer liner (12) for said fluorocarbon polymeric material to be resistant to heat and chemical degradation.

11. A method according to claim 10 characterised in that it comprises dispersing a solution of the fluorocarbon polymer (14) and at least one solvent throughout the braided material (13).

12. A method according to claim 11 characterised in that the fluorocarbon polymeric solution is dispersed by passing the liner (12) having the braided layer (13) thereon through a reservoir of said solution.

13. A method according to either claim 11 or claim 12 characterised by removing the solvent from the solution dispersed throughout the braided material (13) to leave an outer fluorocarbon polymeric coating (14) on the braided material.

14. A method according to any one of claims 11 to 13 characterised by sintering the tubular member (11) after removing the solvent for curing the outer fluorocarbon polymeric coating (14).

15. A method according to any of claims 11 to 14 characterised in that water is utilised as the solvent for providing an aqueous solution of the fluorocarbon polymer.

16. A method according to any one of claims 10 to 15 characterised by forming the inner tubular liner (12) by extrusion.

## Patentansprüche

1. Schlauchaufbau (10) mit einem rohrförmigen Körper (11) und einer Kupplungseinrichtung (20) zum Verbinden der Enden des rohrförmigen Körpers (11) mit Anschlußstücken für ein Hindurchleiten eines Fluids; wobei der rohrförmige Körper (11) ein inneres, organisches, polymeres, rohrförmiges Futter (12), eine geflochtene Verstärkungsschicht (13) um das Äußere des Innenfutters (12) herum und eine organische polymere Beschichtung (14) für die geflochtene Schicht aufweist, wobei die Beschichtung die geflochtene Schicht (13) durchdringt und an ihrer Grenzfläche mit dem Innenfutter (12) gesichert ist, dadurch gekennzeichnet, daß das Innenfutter (12) und die Beschichtung (14) aus Fluorkohlenstoff-Polymeren bestehen, die gegen Hitze und chemischen Abbau widerstandsfähig sind, und daß die Fluorkohlenstoff-Polymerbeschichtung (14) in die geflochtene Schicht (13) von dem Außenumfang her und in radialer Richtung dieser Schicht nach innen dispergiert und in Berührung mit dem Fluorkohlenstoff-Polymerinnenfutter (12) ausgehärtet ist.

2. Aufbau nach Anspruch 1, dadurch gekennzeichnet, daß die geflochtene Schicht (13) ein straff gewickeltes nichtmetallisches Geflecht aufweist.

3. Aufbau nach Anspruch 1 oder Anspruch 2, dadurch gekennzeichnet, daß die geflochtene Schicht (13) eine Glasfaser aufweist.

4. Aufbau nach einem der vorhergehenden Ansprüche, dadurch gekennzeichnet, daß das Innenfutter (12) eine integrale, in Längsrichtung verlaufende Leiteinrichtung (16) aufweist, die sich für ein Durchleiten einer elektrischen Ladung durch das Innenfutter (12) hindurch über die gleiche Länge wie das Innenfutter (12) erstreckt.

5. Aufbau nach einem der vorhergehenden Ansprüche, dadurch gekennzeichnet, daß die Leiteinrichtung (16) aus Ruß besteht.

6. Aufbau nach einem der vorhergehenden Ansprüche, dadurch gekennzeichnet, daß das Fluorkohlenstoff-Polymer aus dem Polymer von Tetrafluorethylen, fluoriertem Ethylenpropylen, Perfluoralkoxy oder Ethylen-Tetrafluorethylen besteht.

7. Aufbau nach einem der vorhergehenden Ansprüche, dadurch gekennzeichnet, daß die Kupplungseinrichtung (20) ein Einsatzteil (22) für einen Eingriff mit dem Innern des Innenfutters (12) und einen Eingriffsteil (30) aufweist, der sich für einen Eingriff mit einem Anschlußstück von diesem Einsatzteil (22) in Längsrichtung erstreckt.

8. Aufbau nach Anspruch 7, dadurch gekennzeichnet, daß die Kupplungseinrichtung (20) einen Verriegelungsbund aufweist, der um das Äußere der äußeren Beschichtung (14) herum angeordnet ist für einen forcierten Eingriff des Innenfutters (12) mit dem Einsatzteil (22) und zur Verhinderung dazwischen einer relativen Axialbewegung.

9. Aufbau nach einem der vorhergehenden Ansprüche, dadurch gekennzeichnet, daß das Innenfutter (12) und die Beschichtung (14) aus dem gleichen Fluorkohlenstoff-Polymermaterial bestehen.

10. Verfahren zum Herstellen eines Schlauchaufbaus (10), bei welchem ein inneres, organisch-polymeres, rohrförmiges Futter (12) ausgebildet wird; eine Verstärkungsschicht (13) aus einem geflochtenen Material um das Äußere des Futters (12) herum vorgesehen wird; eine organischpolymere Beschichtung (14) auf die geflochtene Schicht (13) aufgebracht wird, damit die Beschichtung die geflochtene Schicht durchdringt und an ihrer Grenzfläche mit dem Futter (12) gesichert wird, um einen rohrförmigen Körper (11) auszubilden, und mit dem rohrförmigen Körper (11) eine Kupplungseinrichtung (20) zusammengepaßt wird für ein Verbinden der Enden des rohrförmigen Körpers mit Anschlußstücken für ein Durchleiten eines Fluids, dadurch gekennzeichnet, daß das Futter (12) aus einem Fluorkohlenstoff-Polymer ausgebildet wird, daß die Beschichtung (14) ein in dem geflochtenen Material (13) dispergiertes Fluorkohlenstoff-Polymer aufweist und von dem Außenumfang der Verstärkungsschicht her und radial einwärts aufgebracht wird, und die Fluorkohlenstoff-Polymerbeschichtung (14) in Berührung mit dem Fluorkohlenstoff-Polymerfutter (12) gehärtet wird, damit das Fluorkohlenstoff-Polymermaterial gegen Hitze und chemischen Abbau widerstandfähig ist.

11. Verfahren nach Anspruch 10, dadurch gekennzeichnet, daß es ein Dispergieren einer Lösung des Fluorkohlenstoff-Polymers (14) und wenigstens eines Lösungsmittels durch das gesamte geflochtene Material (13) hindurch umfaßt.

12. Verfahren nach Anspruch 11, dadurch gekennzeichnet, daß die Fluorkohlenstoff-Polymerlösung durch ein Hindurchbewegen des Futters (12) mit der darauf befindlichen geflochtenen Schicht (13) durch einen Vorratsbehälter der Lösung hindurch dispergiert wird.

13. Verfahren nach Anspruch 11 oder Anspruch 12, dadurch gekennzeichnet, daß das Lösemittel von der Lösung entfernt wird, die durch das gesamte geflochtene Material (13) hindurch dispergiert ist, um eine äußere Fluorkohlenstoff-Polymerbeschichtung (14) an dem geflochtenen Material zu belassen.

14. Verfahren nach einem der Ansprüche 11 bis 13, dadurch gekennzeichnet, daß der rohrförmige Körper (11) nach der Entfernung des Lösemittels für ein Aushärten der äußeren Fluorkohlenstoff-Polymerbeschichtung (14) gesintert wird.

15. Verfahren nach einem der Ansprüche 11 bis 14, dadurch gekennzeichnet, daß Wasser als das Lösemittel verwendet wird, um eine wässrige Lösung des Fluorkohlenstoff-Polymers bereitzustellen.

16. Verfahren nach einem der Ansprüche 10 bis 15, dadurch gekennzeichnet, daß das innere rohrförmige Futter (12) durch ein Extrudieren ausgebildet wird.

## Revendications

1. Dispositif de tuyau (10) comportant un élément tubulaire (11) et des moyens d'accouplement (20) destinés à brancher les extrémités de l'élément tubulaire (11) à des équipements destinés à conduire un fluide à travers ceux-ci; l'élément tubulaire (11) comportant un fourreau tubulaire intérieur (12) en matériau polymère organique, une couche de renforcement (13) tressée autour de l'extérieur du fourreau intérieur (12) et un revêtement polymère organique (14) de la couche tressée, ce revêtement pénétrant dans la couche tressée (13) et se fixant à son interface avec le fourreau intérieur (12), caractérisé en ce que le fourreau intérieur (12) et le revêtement (14) sont constitués par des polymères de fluorure de carbone résistant à la chaleur et aux dégradations par les produits chimiques, et en ce que le revêtement polymère de fluorure de carbone (14) est dispersé dans la couche tressée (13) à partir du pourtour extérieur de cette couche et dans une direction dirigée radialement vers l'intérieur de celle-ci, ce revêtement polymère (14) durcissant en contact avec le fourreau intérieur en polymère de fluorure de carbone (12).

2. Dispositif selon la revendication 1, caractérisé en ce que la couche tressée (13) consiste en une tresse métallique enroulée dans un enveloppement serré.

3. Dispositif selon l'une quelconque des revendications 1 et 2, caractérisé en ce que la couche tressée (13) est constituée par de la fibre de verre.

4. Dispositif selon l'une quelconque des revendications précédentes, caractérisé en ce que le fourreau intérieur (12) comporte des moyens conducteurs longitudinaux intégrés (16) s'étendant sur toute la longueur du fourreau intérieur (12) pour conduire des charges électriques à travers ce fourreau intérieur (12).

5. Dispositif selon l'une quelconque des revendications précédentes, caractérisé en ce que les moyens conducteurs (16) sont constitués par du noir de carbone.

6. Dispositif selon l'une quelconque des revendications précédentes, caractérisé en ce que le polymère de fluorure de carbone comprend le polymère de tétrafluoroéthylène, de propylène d'éthylène fluoré, de perfluoroalkoxy, ou d'éthylène-tétrafluoroéthylène.

7. Dispositif selon l'une quelconque des revendications précédentes, caractérisé en ce que les moyens d'accouplement (20) comprennent une partie d'introduction (22) destinée à s'engager dans le fourreau intérieur (12) ; et une partie d'engagement (30) partant longitudinalement de la partie d'introduction (20) pour s'engager dans un équipement.

8. Dispositif selon la revendication 7, caractérisé en ce que les moyens d'accouplement (20) comprennent un collier de verrouillage disposé autour de l'extérieur du revêtement extérieur (14) pour pousser de force le fourreau intérieur (12) en contact d'engagement avec la partie d'introduction (22), et pour empêcher le mouvement axial relatif entre les deux.

9. Dispositif selon l'une quelconque des revendications précédentes, caractérisé en ce que le fourreau intérieur (12) et le revêtement (14) sont réalisés dans le même matériau polymère de fluorure de carbone.

10. Procédé de fabrication d'un dispositif de tuyau (10), comprenant la formation d'un fourreau tubulaire intérieur (12) en matériau polymère organique ; l'utilisation d'une couche de renforcement (13) en matériau tressé autour de l'extérieur du fourreau (12) ; l'application d'un revêtement de polymère organique (14) sur la couche tressée (13) de façon que ce revêtement pénètre dans la couche tressée et se fixe à son interface avec le fourreau (12) pour former un élément tubulaire (11) ; et l'adaptation sur cet élément tubulaire (11) de moyens d'accouplement (20) destinés à relier les extrémités de l'élément tubulaire à des équipements destinés à conduire un fluide à travers ceux-ci, caractérisé en ce qu'il consiste à former le fourreau (12) dans un polymère de fluorure de carbone, à appliquer le revêtement (14) de façon qu'il forme un polymère de fluorure de carbone dispersé dans le matériau tressé (13) à partir du pourtour extérieur de la couche de renforcement et dans une direction dirigée radialement vers l'intérieur de celle-ci, et à faire durcir le revêtement polymère de fluorure de carbone (14) en contact avec le fourreau polymère de fluorure de carbone (12) pour que le matériau polymère de fluorure de carbone soit résistant à la chaleur et aux dégradations par les produits chimiques.

11. Procédé selon la revendication 10, caractérisé en ce qu'il comprend la dispersion d'une solution du polymère de fluorure de carbone (14) et d'au moins un solvant dans tout le matériau tressé (13).

12. Procédé selon la revendication 11, caractérisé en ce qu'on disperse la solution polymère de fluorure de carbone en faisant passer dans un réservoir de cette solution le fourreau (12) portant la couche tressée (13) sur celui-ci.

13. Procédé selon l'une quelconque des revendications 11 et 12, caractérisé en ce qu'on retire le solvant de la solution dispersée dans tout le matériau tressé (13) pour laisser subsister un revêtement polymère de fluorure de carbone extérieur (14) sur le matériau tresse.

14. Procédé selon l'une quelconque des revendications 11 à 13, caractérisé en ce qu'on agglomère l'élément tubulaire (11) après avoir retiré le solvant pour faire durcir le revêtement polymère de fluorure de carbone extérieur (14).

15. Procédé selon l'une quelconque des revendications 11 à 14, caractérisé en ce qu'on utilise de l'eau comme solvant pour former une solution aqueuse du polymère de fluorure de carbone.

16. Procédé selon l'une quelconque des revendications 10 à 15, caractérisé en ce qu'on forme le fourreau tubulaire intérieur (12) par extrusion.
